# EUROPÄISCHE PATENTSCHRIFT

(11) **EP 4 070 508 B1**
(45) Veröffentlichungstag und Bekanntmachung des Hinweises auf die Patenterteilung: **13.11.2024**
(21) Anmeldenummer: 20817308.8
(22) Anmeldetag: 01.12.2020
(51) Int. Cl.: H04L 43/0876, H04L 43/0852

(54) **VERFAHREN, VORRICHTUNG UND SYSTEM ZUM OPTIMIEREN EINER DATENÜBERTRAGUNG ZWISCHEN STEUERUNGSVORRICHTUNGEN UND CLOUD-SYSTEMEN**
METHOD, DEVICE AND SYSTEM FOR OPTIMISING DATA TRANSMISSION BETWEEN CONTROL DEVICES AND CLOUD SYSTEMS
PROCÉDÉ, DISPOSITIF ET SYSTÈME D'OPTIMISATION DE LA TRANSMISSION DE DONNÉES ENTRE DES DISPOSITIFS DE COMMANDE ET DES SYSTÈMES EN NUAGE

(30) Priorität: 04.12.2019 DE 102019218827
(43) Veröffentlichungstag der Anmeldung: 12.10.2022
(73) Patentinhaber: Wago Verwaltungsgesellschaft mbH, 32423 Minden (DE)
(72) Erfinder: GAUS, Thomas, 78737 Fluorn-Winzeln (DE); EGGERT, Stefan, 78078 Niedereschach (DE); DITTGEN, Josha, 78120 Furtwangen im Schwarzwald (DE)
(74) Vertreter: Bardehle Pagenberg Partnerschaft mbB Patentanwälte Rechtsanwälte
(86) Internationale Anmeldenummer: PCT/EP2020/084131
(87) Internationale Veröffentlichungsnummer: WO 2021/110679

(56) Entgegenhaltungen:
- WO-A1-2015/079245
- GB-A- 2 524 855
- US-A- 5 317 562
- US-A1- 2013 315 062
- US-A1- 2017 031 327

## Beschreibung

### Gebiet der Erfindung

Die vorliegende Erfindung betrifft ein Verfahren, Vorrichtungen und ein System zum Optimieren einer Datenübertragung in einem Automatisierungssystem zwischen zumindest einer Steuerungsvorrichtung und zumindest einem Cloud-System.

### Hintergrund

Automatisierungssysteme sind Systeme, die im Gebiet der Automatisierungstechnik zum Einsatz kommen und dazu dienen technische Maschinen und/oder Anlagen zu automatisieren. Der Automatisierungsgrad ist umso höher, je unabhängiger die jeweilige Maschine/Anlage von menschlichen Eingriffen betrieben werden kann.

Insbesondere kann der Automatisierungsgrad durch verbesserte Signalerfassung (d.h. verbesserte Sensoren), durch verbesserte Signalverarbeitung und durch verbesserte Signal- bzw. Datenübertragung gesteigert werden. Die Erhöhung des Automatisierungsgrades erlaubt u.a. neben der Entlastung des Menschen von gefährlichen, anstrengenden oder Routine-Tätigkeiten Qualitätsverbesserungen, eine höhere Leistungsfähigkeit der Maschine/Anlage und die Senkung von Personalkosten.

Automatisierungssysteme werden durch Steuerungsvorrichtungen gesteuert bzw. geregelt. Hierzu kommen Sensoren zur Signalerfassung zum Einsatz. Die Steuerungsvorrichtung setzt die erfassten Sensorsignale um und erzeugt Steuerbefehle, die zu entsprechenden Aktoren geleitet und von diesen ausgeführt werden.

In der Automatisierungstechnik kommen als Steuerungsvorrichtungen insbesondere speicherprogrammierbare, sogenannte SPS-Steuerungen zum Einsatz, welche mit entsprechenden Sensoren und/oder Aktoren kommunizieren können, um unterschiedlichste Aufgaben im Kontext der Automatisierungstechnik zu realisieren.

Neuerdings werden Steuerungsvorrichtungen an externe und/oder interne Cloud-Systeme angebunden. Hierdurch können unterschiedliche Vorteile erreicht werden, wie z. B. Erhöhung der Flexibilität, verbesserte Skalierbarkeit, geringere Kosten, höhere Effizienz und dergleichen. Interne Cloud-Systeme oder private Cloud-Systeme können insbesondere Bestandteil einer internen IT-Infrastruktur sein.

Insbesondere ermöglicht die Anbindung von Steuerungsvorrichtungen an Cloud-Systeme das Senden von Daten von der Steuerungsvorrichtung an das Cloud-System (Up-Link) sowie das Senden von Daten von dem Cloud-System an die Steuerungsvorrichtung (Down-Link). Das Cloud-System kann die empfangenen Daten speichern, auswerten, bearbeiten und/oder der Steuerungsvorrichtung und/oder anderen Nutzern erneut zur Verfügung stellen. Beispielsweise können so Informationen geteilt und/oder aufwendige Daten-Auswertungsschritte ausgelagert werden.

Um ein zuverlässiges Automatisierungssystem und/oder einen hohen Automatisierungsgrad sicherstellen zu können, ist es entscheidend, dass die Daten rechtzeitig, zuverlässig, korrekt und vollständig übertragen werden. Oftmals muss eine Vielzahl von Daten in einem sehr kurzen Zeitfenster von der/ den Steuerungsvorrichtung(en) eines Automatisierungssystems an ein oder mehrere Cloud-Systeme gesendet werden. Ebenso ist es möglich, dass die Daten von dem/den Cloud-System(en) an eine oder mehrere Steuerungsvorrichtungen gesendet werden müssen. Hierzu wird eine ausreichend hohe Datenübertragungsrate benötigt.

Die Datenübertragungsrate definiert die Menge an Daten, welche innerhalb einer bestimmten Zeit übertragen werden kann. Je nach Einsatzort, Einsatzzeit und den zwischen den Systemen verwendeten Übertragungswegen bzw. Übertragungsverfahren unterscheidet sich die Datenübertragungsrate. Auch können vertraglich vereinbarte Leistungen mit einem Provider Einfluss auf die mögliche Datenübertragungsrate haben. Weiterhin unterscheidet sich die theoretisch mögliche Datenübertragungsrate in der Regel stark von der in der praktischen Anwendung verfügbaren Übertragungsrate. Bei einer zu geringen Datenübertragungsrate kann es dazu kommen, dass benötigte Daten nicht oder nicht vollständig und korrekt zum Cloud-System oder zu den Steuerungsvorrichtungen gesendet werden und/oder es einen großen zeitlichen Versatz beim Versand gibt. Ferner kann das Senden von sehr großen Datenmengen (z.B. einem Firmware-Update für die Steuerungsvorrichtung oder Log-Dateien) zu einer "Blockade" der Datenverbindung bzw. des Übertragungswegs führen. Das Ausbleiben der Daten oder eine inkorrekte Übertragung kann negative Auswirkungen auf die Steuerung des Automatisierungssystem haben. Beispielsweise können sicherheitskritische Alarme ausbleiben oder wichtige Folgeprozessen (z. B. automatische Erzeugung von Servicefällen, Rückkommunikation zur Steuerung) nicht ausgeführt werden.

Das Dokument US 2017/0031327 A1 betrifft ein System und Verfahren zur Steuerung und/oder Analyse eines industriellen Prozesses und spezieller ein System oder Verfahren zum Priorisieren der Übertragung von Prozessdaten von anlagenseitiger Automatisierungseinheiten und/oder Verarbeitungseinheiten zu Verarbeitungseinheiten außerhalb der Anlage, beispielsweise in einer Cloud. Hierbei werden Daten der Anlage nach Wichtigkeit priorisiert und dann werden die höher priorisierten Daten zuerst übertragen.

Vor diesem Hintergrund stellt sich vorliegend die Aufgabe die Datenübertragung in Automatisierungssystemen zwischen einer Steuerungsvorrichtung, insbesondere einer SPS-Steuerungsvorrichtung, und zumindest einem Cloud-System derart zu optimieren, dass Daten rechtzeitig, zuverlässig, korrekt und vollständig zwischen der zumindest einen Steuerungsvorrichtung und dem zumindest einen Cloud-System übertragen werden können (im Up-Link und/oder Down-Link).

### Beschreibung der Erfindung

Die Aufgabe wird insbesondere durch ein Verfahren zur Optimierung einer Datenübertragung in einem Automatisierungssystem zwischen einer Steuerungsvorrichtung, insbesondere einer SPS-Steuerungsvorrichtung, und zumindest einem Cloud-System gelöst. Das Verfahren umfasst zumindest die folgenden Schritte:
Ermitteln einer Datenübertragungscharakteristik zumindest eines Übertragungswegs, der für die Datenübertragung zur Verfügung steht mittels einer ersten und/oder einer zweiten Ermittlungskomponente, wobei die erste Ermittlungskomponente Bestandteil der Steuerungsvorrichtung und die zweite Ermittlungskomponente Bestandteil des Cloud-Systems ist.

Analysieren, basierend auf der ermittelten Datenübertragungscharakteristik, ob die zu übertragenden Daten übertragen werden können, wobei das Analysieren mittels einer ersten und/oder einer zweiten Analysekomponente erfolgt, wobei die erste Analysekomponente Bestandteil der Steuerungsvorrichtung und die zweite Analysekomponente Bestandteil des Cloud-Systems ist.

Auswählen wenigstens einer Maßnahme aus einem Satz von Maßnahmen, um die zu übertragenden Daten und/oder den Übertragungsweg anzupassen, falls die zu übertragenden Daten nicht übertragen werden können, um die Datenübertragung zu ermöglichen, wobei die wenigstens eine Maßnahme die Nutzung eines alternativen und/oder zusätzlichen Übertragungsweges umfasst, wobei der alternative und/oder zusätzliche Übertragungsweg ein Übertragungsweg einer weiteren Steuerungsvorrichtung ist, wobei das Auswählen mittels einer ersten und/oder einer zweiten Auswahlkomponente erfolgt, wobei die erste Auswahlkomponente Bestandteil der Steuerungsvorrichtung und die zweite Auswahlkomponente Bestandteil des Cloud-Systems ist.

Durchführen der wenigstens einen ausgewählten Maßnahme mittels einer ersten und/oder einer zweiten Maßnahmenkomponente, wobei die erste Maßnahmenkomponente Bestandteil der Steuerungsvorrichtung und die zweite Maßnahmenkomponente Bestandteil des Cloud-Systems ist.

Die Datenübertragung umfasst das das Senden von Daten von der Steuerungsvorrichtung an das Cloud-System (Up-Link) und/oder das Senden von Daten von dem Cloud-System an die Steuerungsvorrichtung (Down-Link). Insbesondere können Daten von der Steuerungsvorrichtung an ein oder mehrere Cloud-Systeme gesendet werden. Ebenso ist es möglich, dass die Steuerungsvorrichtung Daten von einem oder mehreren Cloud-Systemen empfängt. Zudem können auch mehrere Steuerungsvorrichtung verfahrensgemäß zur Datenübertragung genutzt werden.

Um die Daten rechtzeitig, zuverlässig, korrekt und/oder vollständig zwischen der zumindest einen Steuerungsvorrichtung und dem zumindest einen Cloud-System übertragen zu können, wird zunächst die Datenübertragungscharakteristik zumindest eines verfügbaren Übertragungswegs ermittelt. Das Ermitteln der Datenübertragungscharakteristik kann steuerungsvorrichtungsseitig und/oder Cloud-System-seitig erfolgen. Wird das Ermitteln Cloud-System-seitig durchgeführt, kann die Steuerungsvorrichtung entlastet werden und deren Ressourcen können für andere Aufgaben, wie Steuerungsaufgaben, genutzt werden.

Die Datenübertragungscharakteristik, kann zumindest eines der folgenden umfassen: Bandbreite des Datenübertragungsweges (in Up-Link und Down-Link), Anzahl der zur Verfügung stehenden Datenübertragungswege, Zustand eines empfangsseitigen und/oder senderseitigen Datenpuffers, eine Übertragungszeit, eine Latenz, und/oder weitere Parameter. Somit kann bestimmt werden, welche Datenmenge innerhalb einer bestimmten Zeit übertragen werden kann.

Nach dem Ermitteln wird basierend auf der ermittelten Datenübertragungscharakteristik analysiert, ob die zu übertragenden Daten übertragen werden können. Insbesondere kann bei der Analyse berücksichtigt werden, ob die zu übertragenden Daten rechtzeitig, zuverlässig, korrekt und/oder vollständig zwischen der zumindest einen Steuerungsvorrichtung und dem zumindest einen Cloud-System übertragen werden können. Weiterhin kann bei der Analyse berücksichtigt werden, ob alle Funktionen angeboten werden können, oder ob Funktionen, wie beispielsweise die Funktion "Firmwareupdate", nachfolgend temporär gesperrt werden.

Das Analysieren kann steuerungsvorrichtungsseitig und/oder Cloud-System-seitig erfolgen. Wird das Analysieren Cloud-System-seitig durchgeführt, kann die Steuerungsvorrichtung entlastet werden und deren Ressourcen können für andere Aufgaben, wie Steuerungsaufgaben, genutzt werden.

Ergibt die Analyse, dass die zu übertragenden Daten in der vorliegenden Form nicht übertragen werden können, wird verfahrensgemäß eine Maßnahme aus einem Satz von Maßnahmen ausgewählt, um die zu übertragenden Daten und/oder den Übertragungsweg anzupassen und so die Datenübertragung zu ermöglichen. Die Auswahl der wenigstens einen Maßnahme, kann steuerungsvorrichtungsseitig und/oder Cloud-System-seitig erfolgen. Wird die Auswahl Cloud-System-seitig durchgeführt, kann die Steuerungsvorrichtung entlastet werden und deren Ressourcen können für andere Aufgaben, wie Steuerungsaufgaben, genutzt werden. Betrifft die Durchführung der Maßnahme Komponenten der Steuerungsvorrichtung, so kann das Cloud-System entsprechende Steuerbefehle an die Steuerungsvorrichtung senden, die die Steuerungsvorrichtung zum Durchführen der Maßnahme veranlassen. Ebenso kann die Steuerungsvorrichtung, in dem Fall, dass die Auswahl steuerungsvorrichtungsseitig getroffen wurde, entsprechende Steuerbefehle an das Cloud-System senden, die das Cloud-System zum Durchführen der Maßnahme veranlassen. Sind an der Durchführung der Maßnahme sowohl das Cloud-System als auch die Steuerungsvorrichtung beteiligt, können hierfür zwischen dem Cloud-System und der Steuerungsvorrichtung entsprechende Steuerbefehle übertragen werden. Das Durchführen der Maßnahme kann automatisiert, teil-automatisiert oder manuell erfolgen.

Wurde zumindest eine Auswahl getroffen, wird die Maßnahme, vorzugsweise automatisiert, durch die Steuerungsvorrichtung und/oder das Cloud-System durchgeführt.

Verfahrensgemäß können die Schritte Ermitteln, Analysieren, Auswählen und Durchführen der Maßnahme entweder steuerungsvorrichtungsseitig oder Cloud-System-seitig ausgeführt werden. Dabei müssen nicht alle Schritte steuerungsvorrichtungsseitig oder Cloud-System-seitig ausgeführt werden, sondern die Ausführung der Schritte kann zwischen der Steuerungsvorrichtung und dem Cloud-System verteilt werden. Ebenso können die Schritte sowohl steuerungsvorrichtungsseitig und Cloud-System-seitig ausgeführt werden. Insbesondere kann das Verfahren es ermöglichen, dass die jeweiligen Schritte in Abhängigkeit einer Auslastung des Cloud-Systems bzw. der Steuerungseinrichtung Cloud-System-seitig oder steuerungsvorrichtungsseitig ausgeführt werden, wobei das Umschalten zwischen einer Cloud-System-seitigen oder steuerungsvorrichtungsseitigen Ausführung automatisch erfolgen kann.

Durch das Verfahren kann bestimmt werden, ob es zu einer mangelhaften bzw. fehlerhaften Datenübertragung zwischen Steuerungsvorrichtungen und Cloud-Systemen kommen könnte. Durch das Durchführen der ausgewählten Maßnahmen kann schließlich eine ausreichende Datenübertragung zwischen Steuerungsvorrichtungen und Cloud-Systemen sichergestellt werden, sodass das Automatisierungssystem sicher und zuverlässig mit hohem Automatisierungsgrad betrieben werden kann.

Bei einer (teilweise) Cloud-seitigen Ausführung des Verfahrenes werden die Ressourcen der Steuerungsvorrichtung weniger belastet. Grundlegend ermöglicht das Verfahren die Optimierung der Datenübertragung zwischen Steuerungsvorrichtungen und Cloud-Systemen.

Weiterhin kann das Verfahren das Übertragen von Daten zwischen der Steuerungsvorrichtung und dem Cloud-System nach dem Durchführen der Maßnahme umfassen. Das Übertragen kann insbesondere das Übertragen von angepassten Daten und/oder das Übertragen von Daten auf einem angepassten Übertragungsweg umfassen, wobei die Daten und/oder der Übertragungsweg bei der Durchführung der Maßnahme angepasst wurden. Somit kann eine ausreichende Datenübertragung sichergestellt werden und das Automatisierungssystem kann sicher und zuverlässig mit hohem Automatisierungsgrad betrieben werden.

Ferner kann das Ermitteln der Datenübertragungscharakteristik zumindest eines Übertragungswegs eines der folgenden umfassen: Ermitteln einer Bandbreite des zumindest einen Übertragungswegs, Ermitteln der Anzahl der zur Verfügung stehenden Übertragungswege, Ermitteln eines Zustands eines Datenpuffers, Ermitteln einer Übertragungsdauer, Ermitteln einer Latenz. Durch das Ausführen eines oder mehrere dieser Ermittlungsschritte kann zuverlässig bestimmt werden, welche Datenmenge innerhalb einer bestimmten Zeit übertragen werden kann. Dieses Ermittlungsergebnis kann dann als Grundlage für die anschließende Analyse bereitgestellt werden.

Insbesondere kann das Ermitteln der Datenübertragungscharakteristik zumindest eines Übertragungswegs das Ermitteln der Datenübertragungscharakteristik im Up-Link und/oder Down-Link umfassen. Eine Unterscheidung der Datenübertragungscharakteristik im Up-Link und Down-Link ermöglicht eine präzisiere Ermittlung der Datenübertragungscharakteristik und somit der Datenmenge die innerhalb einer bestimmten Zeit von der Steuerungsvorrichtung an das Cloud-System (d.h. im Up-Link) und von dem Cloud-System an die Steuerungsvorrichtung (d.h. im Down-Link) übertragen werden kann. Somit können die nachfolgende Analyse- und Auswahlschritte präziser erfolgen.

Das Ermitteln der Datenübertragungscharakteristik kann einen abgeschlossenen Geschwindigkeitstest und/oder eine kontinuierliche Überwachung der Datenübertragungscharakteristik umfassen. Ein abgeschlossener Geschwindigkeitstest gibt präzise Auskunft über die aktuell mögliche übertragbare Datenmenge, wobei eine kontinuierliche Überwachung zu jedem Zeitpunkt die mögliche übertragbare Datenmenge ermitteln kann, ohne explizit entsprechende Tests initiieren zu müssen.

Die kontinuierliche Überwachung kann das kontinuierliche Überwachen eines sendeseitigen und/oder empfangsseitigen Datenpuffers und/oder die kontinuierliche Überwachung einer Übertragungsdauer umfassen. Somit kann die mögliche übertragbare Datenmenge sendeseitigen und empfangsseitig überwacht und mögliche Engstellen in der Datenübertragung erkannt werden. Diese Engstellen können mit geeigneten Maßnahmen umgangen und/oder beseitigt werden.

Das Analysieren, ob die zu übertragenden Daten übertragen werden können kann auf der ermittelten Datenübertragungscharakteristik und einer Datenkonfiguration von zu übertragenden Daten basieren. Zudem kann ein Vergleich von Datenkonfiguration und Datenübertragungscharakteristik die Feststellung ermöglichen, ob die zu übertragenden Daten rechtzeitig, zuverlässig, korrekt und/oder vollständig übertragen werden können sowie die Auswahl geeigneter Maßnahmen.

Das Verfahren kann weiterhin das Bestimmen der Datenkonfiguration der zu übertragenden Daten umfassen, wobei die Datenkonfiguration zumindest einen der folgenden Konfigurationsparameter umfassen kann: eine Datenmenge, eine Datenart, eine Priorität der Daten, ein benötigtes Sicherheitsniveau und/oder eine benötigte Redundanz. Die Datenart kann beispielsweise angeben, um welche Art von Daten (Sensordaten, Log-Daten, Steuerbefehle, Updates, Alarmnachrichten, ...) es sich handelt. Die Priorität der Daten kann unterschiedlich gewählt sein. Beispielsweise können unterschiedliche Datenarten unterschiedliche Prioritäten aufweisen. Ebenso kann sich die Priorität der Daten ändern, beispielsweise kann die Priorität erhöht werden, wenn die Daten längere Zeit in einem Datenpuffer gespeichert sind, ohne bereits übertragen worden zu sein. Das benötigtes Sicherheitsniveau bzw. die benötigte Redundanz kann angeben, ob die Daten bei der Übertragung zusätzlich verschlüsselt werden müssen oder mit entsprechend hoher Redundanz gesendet werden müssen, um beispielsweise Fehlerkorrekturverfahren zu ermöglichen.

Der Satz von Maßnahmen, aus dem die zumindest eine durchzuführende Maßnahme ausgewählt wird, enthält die Maßnahme der Nutzung eines alternativen und/oder zusätzlichen Übertragungsweges und kann weiterhin zumindest eine der folgenden Maßnahmen enthalten
- ein Priorisierungsverfahren,
- ein Datenreduktionsverfahren,
- ein Funktionsreduktionsverfahren,
- Anpassung eines Übertragungsintervalls,
- Nutzung eines alternativen und/oder zusätzlichen Übertragungsverfahrens.

Beim Priorisierungsverfahren werden höher priorisierte Daten zuerst versendet. Beim Datenreduktionsverfahren werden die Daten komprimiert und/oder es können zu übertragenden Daten weggelassen werden. Dies kann beispielsweise durch Verfahren wie Publishing, Ändern einer Sampling-Rate, das Deaktivieren der Übertragung ganzer Collection Groups (d.h. einer Gruppe bzw. einer Sammlung von Datenpunkten) oder das Deaktivieren der Übertragung einzelner Datenpunkte erfolgen. Ebenso können Datenreduktionsregeln angewandt werden, um die Datenmenge zu reduzieren. Beispielsweise können die zu übertragenden Daten aggregiert werden. Dies umfasst beispielsweise die Übertragung von Minimalwerten und/oder Maximalwerten anstelle von gesamten Wertverläufen und/oder die Übertragung von Durchschnittswerten anstellen von gesamten Wertverläufen. Weiterhin kann die Datenmenge reduziert werden, indem nur dann Daten übertragen werden, wenn festgestellt wird, dass sich ein Wert eines zu überwachenden Parameters des Automatisierungssystems stark ändert. Eine starke Änderung des betreffenden Parameters kann festgestellt werden, wenn ein vordefinierter Grenzwert über- bzw. unterschritten wird, oder eine Änderungsgeschwindigkeit des Werts von einer zulässigen Änderungsgeschwindigkeit abweicht.

Funktionsreduktionsverfahren können die Übertragung großer Dateien, wie Firmware-Updates oder Log-Dateien (für den Moment) ablehnen, oder Funktionen wir Remote-Access vorrübergehend sperren. Insbesondere können Funktionen, die die Übertragung großer Datenmengen erfordern temporär gesperrt werden.

Weiterhin werden alternative und/oder zusätzliche Übertragungswege bzw. Übertragungsverfahren genutzt, um die Bandbreite und somit die mögliche Datenübertragungsmenge zu erhöhen. Dazu kann die Datenübertragung aufgeteilt werden und über eine weitere Steuerungsvorrichtung bzw. ein weiteres Gateway bzw. einen weiteren Übertragungsweg erfolgen.

Insbesondere ist der alternative und/oder zusätzliche Übertragungsweg ein Übertragungsweg einer weiteren Steuerungsvorrichtung. Somit kann der Übertragungsweg der weiteren Steuerungsvorrichtung zwischenzeitlich als Gateway benutzt werden, um die Bandbreite kurzfristig zu erhöhen.

Der zumindest eine Übertragungsweg kann kabelgebunden und/oder kabellos eingerichtet sein. Innerhalb eines Automatisierungs- bzw. Steuerungssystems können sowohl kabelgebundene und kabellose Übertragungswege zur Datenübertragung genutzt werden. Insbesondere können die Daten parallel und/oder seriell von zumindest einer Steuerungsvorrichtung an mehrere Cloud-Systemen übertagen werden.

Weiterhin wird die Aufgabe durch ein Verfahren zum Steuern eines Automatisierungssystems mittels einer Steuerungsvorrichtung, vorzugsweise mittels einer SPS- Steuerungsvorrichtung, gelöst. Die die Steuerungsvorrichtung nutz dabei zum Steuern des Automatisierungssystems das zuvor beschriebene Verfahren zur Optimierung einer Datenübertragung in dem Automatisierungssystem zwischen der Steuerungsvorrichtung und zumindest einem Cloud-System. Durch dieses Verfahren kann das Automatisierungssystem zuverlässig und sicher gesteuert werden, da eine sichere und zuverlässige Datenübertragung zwischen Steuerungsvorrichtung und Cloud-System sichergestellt werden kann.

Weiterhin wird die Aufgabe durch eine Steuerungsvorrichtung, insbesondere eine SPS-Steuerungsvorrichtung, gelöst, wobei die Steuerungsvorrichtung zur Optimierung einer Datenübertragung in einem Automatisierungssystem zwischen der Steuerungsvorrichtung und zumindest einem Cloud-System eingerichtet ist. Die Steuerungsvorrichtung beinhaltet hierbei eine Datenübertragungsvorrichtung und eine Komponentenvorrichtung, welche zumindest eine der folgenden Komponenten umfasst:
- eine Ermittlungskomponente, eingerichtet zum Ermitteln einer Datenübertragungscharakteristik zumindest eines Übertragungswegs, der für die Datenübertragung zur Verfügung steht;
- eine Analysekomponente, eingerichtet zum Analysieren, basierend auf der ermittelten Datenübertragungscharakteristik, ob die zu übertragenden Daten übertragen werden können,
- eine Auswahlkomponente, eingerichtet zum Auswählen wenigstens einer Maßnahme aus einem Satz von Maßnahmen, um die zu übertragenden Daten und/oder den Übertragungsweg anzupassen, falls die zu übertragenden Daten nicht übertragen werden können, um die Datenübertragung zu ermöglichen, wobei die wenigstens eine Maßnahme die Nutzung eines alternativen und/oder zusätzlichen Übertragungsweges umfasst, wobei der alternative und/oder zusätzliche Übertragungsweg ein Übertragungsweg einer weiteren Steuerungsvorrichtung ist,
- eine Maßnahmenkomponente, eingerichtet zum Durchführen der wenigstens einen ausgewählten Maßnahme.

Weiterhin wird die Aufgabe durch ein Cloud-System gelöst, welches zur Optimierung einer Datenübertragung in einem Automatisierungssystem zwischen einer Steuerungsvorrichtung und dem Cloud-System eingerichtet ist. Das Cloud-System beinhaltet eine Datenübertragungsvorrichtung und eine Komponentenvorrichtung, welche zumindest eine der folgenden Komponenten umfasst:
- eine Ermittlungskomponente, eingerichtet zum Ermitteln einer Datenübertragungscharakteristik zumindest eines Übertragungswegs, der für die Datenübertragung zur Verfügung steht;
- eine Analysekomponente, eingerichtet zum Analysieren, basierend auf der ermittelten Datenübertragungscharakteristik, ob die zu übertragenden Daten übertragen werden können,
- eine Auswahlkomponente, eingerichtet zum Auswählen wenigstens einer Maßnahme aus einem Satz von Maßnahmen, um die zu übertragenden Daten und/oder den Übertragungsweg anzupassen, falls die zu übertragenden Daten nicht übertragen werden können, um die Datenübertragung zu ermöglichen, wobei die wenigstens eine Maßnahme die Nutzung eines alternativen und/oder zusätzlichen Übertragungsweges umfasst, wobei der alternative und/oder zusätzliche Übertragungsweg ein Übertragungsweg einer weiteren Steuerungsvorrichtung ist,
- eine Maßnahmenkomponente, eingerichtet zum Durchführen der wenigstens einen ausgewählten Maßnahme.

Weiterhin wird die Aufgabe durch ein Steuerungssystem, umfassend die zuvor beschriebene Steuerungsvorrichtung und das zuvor beschriebene Cloud-System gelöst, wobei das Steuerungssystem dazu eingerichtet ist, das zuvor beschriebe Verfahren auszuführen. Die jeweiligen Komponenten der Komponentenvorrichtung können dabei sowohl steuerungsvorrichtungsseitig als auch Cloud-System-seitig implementiert sein. Die Implementierung kann in Hardware und/oder Software erfolgen.

Weiterhin wird die Aufgabe durch ein Computerprogramm gelöst, welches Instruktionen umfasst, die von einem oder mehreren Prozessoren ausgeführt werden können, wobei die Instruktionen bei deren Ausführung den einen oder die mehreren Prozessoren dazu veranlassen das zuvor beschriebene Verfahren auszuführen.

Mit der Steuerungsvorrichtung, dem Cloud-System dem Steuerungssystem und dem Computerprogramm sind die im Zusammenhang mit dem Verfahren beschriebenen Vorteile jeweils erreichbar.

### Beschreibung der Figuren

Im Folgenden werden einige Ausführungsformen der vorliegenden Erfindung anhand der beigefügten Figuren näher erläutert. Dabei zeigt
- Figur 1: ein schematisches Ablaufdiagramm eines Verfahrens zur Optimierung der Datenübertragung;
- Figuren 2A-C: schematische Darstellungen einer Steuerungsvorrichtung und eines Cloud-Systems;
- Figur 3: eine schematische Darstellung eines Steuerungssystems, und
- Figur 4: eine schematische Darstellung einer Komponentenvorrichtung.

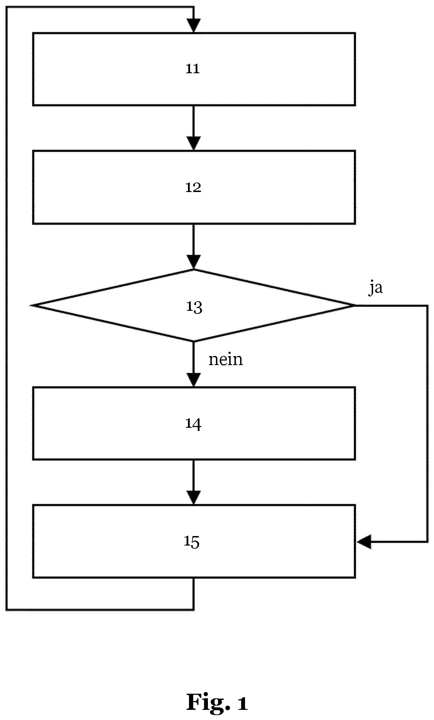

Insbesondere zeigt Figur 1 ein schematisches Ablaufdiagramm eines Verfahrens 10. Das Verfahren 10 umfasst die Schritte des Ermittelns 11, des Analysierens 12, des Auswählens 13, des Durchführens 14 sowie optional des Übertragens 15 von Daten.

Im ersten Schritt 11 wird eine Datenübertragungscharakteristik zumindest eines Übertragungswegs ermittelt, der für die Datenübertragung zur Verfügung steht. Dies erfolgt mittels einer ersten und/oder einer zweiten Ermittlungskomponente, welche steuerungsvorrichtungsseitig oder Cloud-Systemseitig angeordnet ist.

In einem zweiten Schritt 12, wird basierend auf der ermittelten Datenübertragungscharakteristik und optional einer Datenkonfiguration von zu übertragenden Daten analysiert, ob die zu übertragenden Daten übertragen werden können. Das Analysieren 12 erfolgt mittels einer ersten und/oder einer zweiten Analysekomponente, wobei die erste Analysekomponente Bestandteil der Steuerungsvorrichtung und die zweite Analysekomponente Bestandteil des Cloud-Systems ist.

In einem dritten Schritt 13, wird wenigstens eine Maßnahme aus einem Satz von Maßnahmen ausgewählt, um die zu übertragenden Daten und/oder den Übertragungsweg anzupassen, falls die zu übertragenden Daten nicht übertragen werden können, um die Datenübertragung zu ermöglichen. Das Auswählen 13 erfolgt mittels einer ersten und/oder einer zweiten Auswahlkomponente, wobei die erste Auswahlkomponente Bestandteil der Steuerungsvorrichtung und die zweite Auswahlkomponente Bestandteil des Cloud-Systems ist. Ergibt die Analyse in Schritt 12, dass die zu übertragenden Daten übertragen werden können, kann unmittelbar mit Schritt 15 fortgefahren werden, ohne dass eine Maßnahme ausgewählt und/oder durchgeführt wird.

In einem vierten Schritt 14, wird die wenigstens eine ausgewählte Maßnahme mittels einer ersten und/oder einer zweiten Maßnahmenkomponente durchgeführt, wobei die erste Maßnahmenkomponente Bestandteil der Steuerungsvorrichtung und die zweite Maßnahmenkomponente Bestandteil des Cloud-Systems ist.

In einem fünften Schritt 15 werden die Daten übertragen. Die Übertragung kann von der Steuerungsvorrichtung an das Cloud-System oder von dem Cloud-System an die Steuerungsvorrichtung erfolgen. Das Verfahren ist nicht auf je eine Steuerungsvorrichtung und ein Cloud-System beschränkt, sondern kann mit beliebig vielen Steuerungsvorrichtungen und/oder Cloud-Systemen ausgeführt werden.

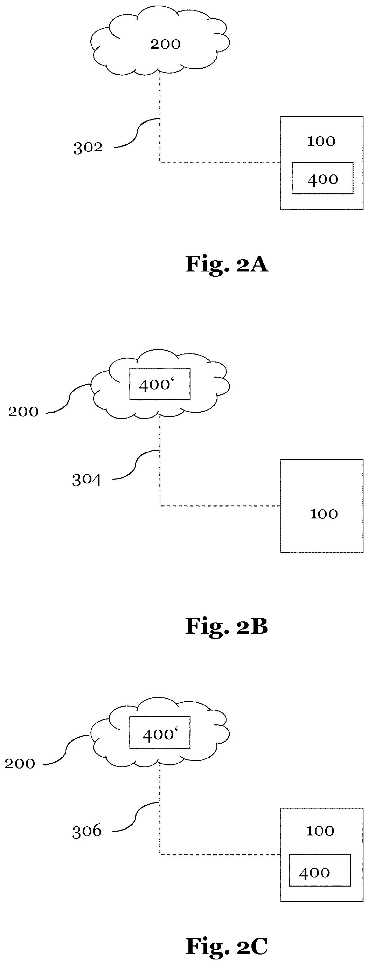

Die Figuren 2A bis 2C zeigen unterschiedliche Konfigurationen von Steuerungsvorrichtungen 100 und Cloud-Systemen 200, die jeweils über einen Datenübertragungsweg 302, 304, 306 Daten übertragen können. Die Datenübertragung kann dabei in beide Richtungen, d.h. von der Steuerungsvorrichtung 100 an das Cloud-System 200 oder von dem Cloud-System 200 an die Steuerungsvorrichtung 100 erfolgen.

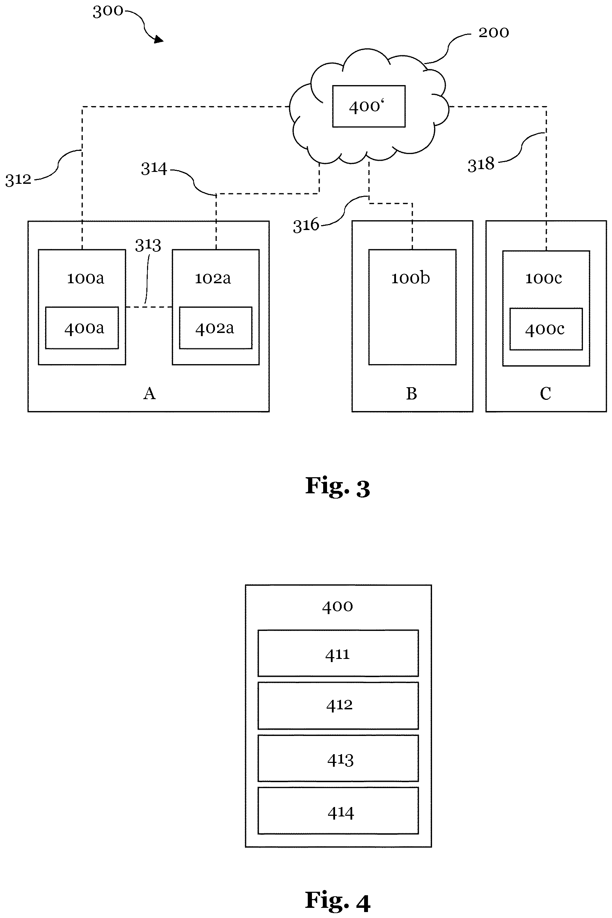

In der ersten Konfiguration gemäß Figur 2A umfasst die Steuerungsvorrichtung 100 eine Komponentenvorrichtung 400, welche in Zusammenhang mit Figur 4 näher beschrieben ist. Das Cloud-System 200 umfasst keine entsprechende Komponentenvorrichtung. In dieser Konfiguration würde das beschriebene Verfahren ausschließlich durch die Steuerungsvorrichtung 100 ausgeführt.

In der zweiten Konfiguration gemäß Figur 2B umfasst die Steuerungsvorrichtung 100 keine Komponentenvorrichtung. Stattdessen umfasst das Cloud-System 200 eine entsprechende Komponentenvorrichtung 400'. Die Komponentenvorrichtung 400' entspricht der Komponentenvorrichtung 400, welche in Zusammenhang mit Figur 4 näher beschrieben ist. In dieser Konfiguration würde das beschriebene Verfahren ausschließlich durch das Cloud-System 200 ausgeführt.

In der dritten Konfiguration gemäß Figur 2C umfasst sowohl die Steuerungsvorrichtung 100 als auch das Cloud-System 200 eine entsprechende Komponentenvorrichtung 400, 400'. In dieser Konfiguration kann die Ausführung des beschriebenen Verfahrens zwischen dem Cloud-System 200 und der Steuerungsvorrichtung 100 aufgeteilt werden. Diese Aufteilung ist nicht zwingend statisch festgelegt, sondern die Aufteilung der Ausführung der einzelnen Verfahrensschritte kann dynamisch erfolgen, wobei bei der Aufteilung die Auslastung der Steuerungsvorrichtung 100 und/oder des Cloud-Systems 200 berücksichtigt wird.

Figur 3 zeigte eine schematische Darstellung eines Steuerungssystems 1, welches eine Vielzahl von Steuerungsvorrichtungen 100a, 102a, 100b, 100c und ein Cloud-System 200 umfasst. Die Steuerungsvorrichtungen 100a, 102a sind an einem ersten Standort A, die Steuerungsvorrichtung 100b an einem zweiten Standort B und die Steuerungsvorrichtung 100c an einem dritten Standort C angeordnet, wobei die Standorte A, B und C räumlich voneinander getrennt sind. Die Steuerungsvorrichtungen 100a, 102a, 100b, 100c und das Cloud-System 200 sind über ein Datenübertragungsnetzwerk 300, umfassend Übertragungswege 312, 313, 314, 316, 318 miteinander verbunden. Die Datenübertragung indem Datenübertragungsnetzwerk 300 kann entsprechend dem Verfahren 10 optimiert werden. Insbesondere kann die Steuerungsvorrichtung 100a die Steuerungsvorrichtung 100b bzw. die Übertragungswege 313, 314 als Gateway nutzen, um kurzfristig eine höhere Datenübertragungsrate bereitstellen zu können. Übertragungswege 312, 313, 314, 316, 318 können jeweils kabellos oder kabelgebunden sein.

Figur 4 zeigt eine schematische Darstellung einer Komponentenvorrichtung 400, welche zumindest eine der folgenden Komponenten umfasst:
- eine Ermittlungskomponente 411, eingerichtet zum Ermitteln einer Datenübertragungscharakteristik zumindest eines Übertragungswegs, der für die Datenübertragung zur Verfügung steht;
- eine Analysekomponente 412, eingerichtet zum Analysieren, basierend auf der ermittelten Datenübertragungscharakteristik und optional einer Datenkonfiguration von zu übertragenden Daten, ob die zu übertragenden Daten übertragen werden können,
- eine Auswahlkomponente 413, eingerichtet zum Auswählen wenigstens einer Maßnahme aus einem Satz von Maßnahmen, um die zu übertragenden Daten und/oder den Übertragungsweg anzupassen, falls die zu übertragenden Daten nicht übertragen werden können, um die Datenübertragung zu ermöglichen,
- eine Maßnahmenkomponente 414, eingerichtet zum Durchführen der wenigstens einen ausgewählten Maßnahme.

### Bezugszeichenliste

- 1: Steuerungssystem
- 10: Verfahren
- 11: Ermitteln
- 12: Analysieren
- 13: Auswählen
- 14: Durchführen
- 15: Übertragen
- 100, 100a, 102a, 100b, 100c: Steuerungsvorrichtung
- 200: Cloud-System
- 300: Datenübertragungsnetzwerk
- 302, 304, 306: Übertragungswege
- 312, 313, 314, 316, 318: Übertragungswege
- 400, 400', 400a, 402a, 400c: Komponentenvorrichtung
- 411: Ermittlungskomponente
- 412: Analysekomponente
- 413: Auswahlkomponente
- 414: Maßnahmenkomponente
- A, B, C: Standorte

## Patentansprüche

1. Verfahren (10) zur Optimierung einer Datenübertragung in einem Automatisierungssystem zwischen einer Steuerungsvorrichtung (100) und zumindest einem Cloud-System (200), wobei das Verfahren (10) zumindest die folgenden Schritte umfasst:
Ermitteln (11) einer Datenübertragungscharakteristik zumindest eines Übertragungswegs (302, 304, 306), der für die Datenübertragung zur Verfügung steht mittels einer ersten und/oder einer zweiten Ermittlungskomponente (411), wobei die erste Ermittlungskomponente Bestandteil der Steuerungsvorrichtung und die zweite Ermittlungskomponente Bestandteil des Cloud-Systems ist;
Analysieren (12), basierend auf der ermittelten Datenübertragungscharakteristik, ob die zu übertragenden Daten übertragen werden können, wobei das Analysieren mittels einer ersten und/oder einer zweiten Analysekomponente (412) erfolgt, wobei die erste Analysekomponente Bestandteil der Steuerungsvorrichtung und die zweite Analysekomponente Bestandteil des Cloud-Systems ist;
Auswählen (13) wenigstens einer Maßnahme aus einem Satz von Maßnahmen, um die zu übertragenden Daten und/oder den Übertragungsweg anzupassen, falls die zu übertragenden Daten nicht übertragen werden können, um die Datenübertragung zu ermöglichen, wobei die wenigstens eine Maßnahme die Nutzung eines alternativen und/oder zusätzlichen Übertragungsweges umfasst, wobei der alternative und/oder zusätzliche Übertragungsweg ein Übertragungsweg (313, 314) einer weiteren Steuerungsvorrichtung ist, wobei das Auswählen mittels einer ersten und/oder einer zweiten Auswahlkomponente (413) erfolgt, wobei die erste Auswahlkomponente Bestandteil der Steuerungsvorrichtung und die zweite Auswahlkomponente Bestandteil des Cloud-Systems ist,
Durchführen (14) der wenigstens einen ausgewählten Maßnahme mittels einer ersten und/oder einer zweiten Maßnahmenkomponente (414), wobei die erste Maßnahmenkomponente Bestandteil der Steuerungsvorrichtung und die zweite Maßnahmenkomponente Bestandteil des Cloud-Systems ist.

2. Verfahren (10) nach Anspruch 1, weiterhin umfassend das Übertragen (15) von Daten zwischen der Steuerungsvorrichtung (100) und dem Cloud-System (200), nach dem Durchführen (14) der Maßnahme.

3. Verfahren (10) nach einem der vorhergehenden Ansprüche, wobei das Ermitteln (11) der Datenübertragungscharakteristik zumindest eines Übertragungswegs eines der folgenden umfasst:
- Ermitteln einer Bandbreite des zumindest einen Übertragungswegs,
- Ermitteln der Anzahl der zur Verfügung stehenden Übertragungswege,
- Ermitteln eines Zustands eines Datenpuffers,
- Ermitteln einer Übertragungsdauer,
- Ermitteln einer Latenz.

4. Verfahren (10) nach einem der vorhergehenden Ansprüche, wobei das Ermitteln (11) der Datenübertragungscharakteristik zumindest eines Übertragungswegs (302, 304, 306) das Ermitteln (11) der Datenübertragungscharakteristik im Up-Link und/oder Down-Link umfasst.

5. Verfahren (10) nach einem der vorhergehenden Ansprüche, wobei das Ermitteln (11) der Datenübertragungscharakteristik einen abgeschlossenen Geschwindigkeitstest und/oder eine kontinuierliche Überwachung der Datenübertragungscharakteristik umfasst.

6. Verfahren (10) nach Anspruch 5, wobei die kontinuierliche Überwachung die kontinuierliche Überwachung eines sendeseitigen und/oder empfangsseitigen Datenpuffers und/oder die kontinuierliche Überwachung einer Übertragungsdauer umfasst.

7. Verfahren (10) nach einem der vorhergehenden Ansprüche, wobei das Analysieren (12), ob die zu übertragenden Daten übertragen werden können auf der ermittelten Datenübertragungscharakteristik und einer Datenkonfiguration von zu übertragenden Daten basiert.

8. Verfahren (10) nach einem der vorhergehenden Ansprüche, wobei das Verfahren weiterhin das Bestimmen der Datenkonfiguration der zu übertragenden Daten umfasst, und wobei die Datenkonfiguration zumindest einen der folgenden Konfigurationsparameter umfasst: eine Datenmenge, Datenart, Priorität, benötigtes Sicherheitsniveau, benötigte Redundanz.

9. Verfahren (10) nach einem der vorhergehenden Ansprüche, wobei der Satz von Maßnahmen zumindest die Maßnahme der Nutzung eines alternativen und/oder zusätzlichen Übertragungsweges enthält, wobei der Satz von Maßnahmen weiterhin zumindest eine der folgenden Maßnahmen enthält:
- ein Priorisierungsverfahren,
- ein Datenreduktionsverfahren,
- ein Funktionsreduktionsverfahren,
- Anpassung eines Übertragungsintervalls,
- Nutzung eines alternativen und/oder zusätzlichen Übertragungsverfahrens.

10. Verfahren (10) nach einem der vorhergehenden Ansprüche, wobei der zumindest eine Übertragungsweg (302, 304, 306) kabelgebunden und/oder kabellos eingerichtet ist.

11. Verfahren (10) nach einem der vorhergehenden Ansprüche, wobei die Daten parallel und/oder seriell von zumindest einer Steuerungsvorrichtung an mehrere Cloud-Systeme übertragen werden.

12. Verfahren zum Steuern eines Automatisierungssystems mittels einer Steuerungsvorrichtung (100), wobei die Steuerungsvorrichtung (100) zum Steuern des Automatisierungssystems das Verfahren (10) zur Optimierung einer Datenübertragung in dem Automatisierungssystem zwischen der Steuerungsvorrichtung (100) und zumindest einem Cloud-System (200) gemäß einem der Ansprüche 1 bis 11 nutzt.

13. Steuerungsvorrichtung (100), eingerichtet zur Optimierung einer Datenübertragung in einem Automatisierungssystem zwischen der Steuerungsvorrichtung (100), und zumindest einem Cloud-System (200), wobei die Steuerungsvorrichtung eine Datenübertragungsvorrichtung und eine Komponentenvorrichtung (400) beinhaltet, welche zumindest eine der folgenden Komponenten umfasst:
eine Ermittlungskomponente (411), eingerichtet zum Ermitteln (11) einer Datenübertragungscharakteristik zumindest eines Übertragungswegs (302, 304, 306), der für die Datenübertragung zur Verfügung steht;
eine Analysekomponente (412), eingerichtet zum Analysieren (12), basierend auf der ermittelten Datenübertragungscharakteristik, ob die zu übertragenden Daten übertragen werden können,
eine Auswahlkomponente (413), eingerichtet zum Auswählen (13) wenigstens einer Maßnahme aus einem Satz von Maßnahmen, um die zu übertragenden Daten und/oder den Übertragungsweg anzupassen, falls die zu übertragenden Daten nicht übertragen werden können, um die Datenübertragung zu ermöglichen, wobei die wenigstens eine Maßnahme die Nutzung eines alternativen und/oder zusätzlichen Übertragungsweges umfasst, wobei der alternative und/oder zusätzliche Übertragungsweg ein Übertragungsweg (313, 314) einer weiteren Steuerungsvorrichtung ist,
eine Maßnahmenkomponente (414), eingerichtet zum Durchführen (14) der wenigstens einen ausgewählten Maßnahme.

14. Cloud-System (200) eingerichtet zur Optimierung einer Datenübertragung in einem Automatisierungssystem zwischen einer Steuerungsvorrichtung (100), und dem Cloud-System (200), wobei das Cloud-System (200) eine Datenübertragungsvorrichtung und eine Komponentenvorrichtung (400') beinhaltet, welche zumindest eine der folgenden Komponenten umfasst:
eine Ermittlungskomponente (411), eingerichtet zum Ermitteln (11) einer Datenübertragungscharakteristik zumindest eines Übertragungswegs (302, 304, 306), der für die Datenübertragung zur Verfügung steht;
eine Analysekomponente (412), eingerichtet zum Analysieren (12), basierend auf der ermittelten Datenübertragungscharakteristik, ob die zu übertragenden Daten übertragen werden können,
eine Auswahlkomponente (413), eingerichtet zum Auswählen (13) wenigstens einer Maßnahme aus einem Satz von Maßnahmen, um die zu übertragenden Daten und/oder den Übertragungsweg anzupassen, falls die zu übertragenden Daten nicht übertragen werden können, um die Datenübertragung zu ermöglichen, wobei die wenigstens eine Maßnahme die Nutzung eines alternativen und/oder zusätzlichen Übertragungsweges umfasst, wobei der alternative und/oder zusätzliche Übertragungsweg ein Übertragungsweg (313, 314) einer weiteren Steuerungsvorrichtung ist,
eine Maßnahmenkomponente (414), eingerichtet zum Durchführen der wenigstens einen ausgewählten Maßnahme.

15. Steuerungssystem (1), umfassend eine Steuerungsvorrichtung (100) nach Anspruch 13 und ein Cloud-System (200) nach Anspruch 14, wobei das Steuerungssystem (1) dazu eingerichtet ist, das Verfahren gemäß einem der Ansprüche 1 bis 12 auszuführen.

16. Computerprogramm, umfassend Instruktionen, die von einem oder mehreren Prozessoren ausgeführt werden können, wobei die Instruktionen bei deren Ausführung den einen oder die mehreren Prozessoren dazu veranlassen, das Verfahren gemäß einem der Ansprüche 1 bis 12 auszuführen.

17. Verfahren (10) nach einem der Ansprüche 1 bis 12 oder Steuerungsvorrichtung (100) nach Anspruch 13 oder Cloud-System (200) nach Anspruch 14, wobei die Steuerungsvorrichtung (100) eine speicherprogrammierbare Steuerung-, SPS-Steuerungsvorrichtung ist.

## Claims

1. A Method (10) for optimizing a data transmission in an automation system between a control device (100) and at least one cloud system (200), wherein the method (10) comprises at least the following steps:
determining (11) a data transmission characteristic of at least one transmission path (302, 304, 306) which is available for the data transmission by means of a first and/or a second determination component (411), wherein the first determination component is part of the control device and the second determination component is part of the cloud system;
analyzing (12), based on the determined data transmission characteristic, whether the data to be transmitted can be transmitted, wherein the analyzing is carried out by means of a first and/or a second analysis component (412), wherein the first analysis component is part of the control device and the second analysis component is part of the cloud system;
selecting (13) at least one measure from a set of measures in order to adapt the data to be transmitted and/or the transmission path if the data to be transmitted cannot be transmitted in order to enable the data transmission, wherein the at least one measure comprises the use of an alternative and/or additional transmission path, wherein the alternative and/or additional transmission path is a transmission path (313, 314) of a further control device, wherein the selecting is carried out by means of a first and/or a second selection component (413), wherein the first selection component is part of the control device and the second selection component is part of the cloud system,
performing (14) the at least one selected measure by means of a first and/or a second measure component (414), wherein the first measure component is part of the control device and the second measure component is part of the cloud system.

2. The method (10) according to claim 1, further comprising transmitting (15) data between the control device (100) and the cloud system (200), after performing (14) the measure.

3. The method (10) according to one of the preceding claims, wherein determining (11) the data transmission characteristic of at least one transmission path comprises one of the following:
- determining a bandwidth of the at least one transmission path,
- determining the number of available transmission paths,
- determining a state of a data buffer,
- determining a transmission duration,
- determining a latency.

4. The method (10) according to one of the preceding claims, wherein determining (11) the data transmission characteristic of at least one transmission path (302, 304, 306) comprises determining (11) the data transmission characteristic in the up-link and/or down-link.

5. The method (10) according to one of the preceding claims, wherein determining (11) the data transmission characteristic comprises a completed speed test and/or a continuous monitoring of the data transmission characteristic.

6. The method (10) according to claim 5, wherein the continuous monitoring comprises the continuous monitoring of a transmission-side and/or reception-side data buffer and/or the continuous monitoring of a transmission duration.

7. The method (10) according to one of the preceding claims, wherein
analyzing (12) whether the data to be transmitted can be transmitted is based on the determined data transmission characteristic and a data configuration of data to be transmitted.

8. The method (10) according to one of the preceding claims, wherein the method further comprises determining the data configuration of the data to be transmitted, and wherein the data configuration comprises at least one of the following configuration parameters: a data amount, data type, priority, required security level, required redundancy.

9. The method (10) according to one of the preceding claims, wherein the set of measures includes at least the measure of the use of an alternative and/or additional transmission path, wherein the set of measures further includes at least one of the following measures:
- a prioritization method,
- a data reduction method,
- a function reduction method,
- adjustment of a transmission interval,
- use of an alternative and/or additional transmission method.

10. The method (10) according to one of the preceding claims, wherein the at least one transmission path (302, 304, 306) is configured in a wired and/or wireless manner.

11. The method (10) according to one of the preceding claims, wherein the data are transmitted in parallel and/or serially from at least one control device to a plurality of cloud systems.

12. A method for controlling an automation system by means of a control device (100), wherein the control device (100) uses the method (10) for optimizing a data transmission in the automation system between the control device (100) and at least one cloud system (200) according to one of claims 1 to 11 for controlling the automation system.

13. A control device (100), configured for optimizing a data transmission in an automation system between the control device (100), and at least one cloud system (200), wherein the control device includes a data transmission device and a component device (400), which comprises at least one of the following components:
a determination component (411), configured for determining (11) a data transmission characteristic of at least one transmission path (302, 304, 306) which is available for the data transmission;
an analysis component (412), configured for analyzing (12), based on the determined data transmission characteristic, whether the data to be transmitted can be transmitted,
a selection component (413), configured for selecting (13) at least one measure from a set of measures in order to adapt the data to be transmitted and/or the transmission path if the data to be transmitted cannot be transmitted in order to enable the data transmission, wherein the at least one measure comprises the use of an alternative and/or additional transmission path, wherein the alternative and/or additional transmission path is a transmission path (313, 314) of a further control device,
a measure component (414), configured for performing (14) the at least one selected measure.

14. A cloud system (200), configured for optimizing a data transmission in an automation system between a control device (100), and the cloud system (200), wherein the cloud system (200) includes a data transmission device and a component device (400'), which comprises at least one of the following components:
a determination component (411), configured for determining (11) a data transmission characteristic of at least one transmission path (302, 304, 306) which is available for the data transmission;
an analysis component (412), configured for analyzing (12), based on the determined data transmission characteristic, whether the data to be transmitted can be transmitted,
a selection component (413), configured for selecting (13) at least one measure from a set of measures in order to adapt the data to be transmitted and/or the transmission path if the data to be transmitted cannot be transmitted in order to enable the data transmission, wherein the at least one measure comprises the use of an alternative and/or additional transmission path, wherein the alternative and/or additional transmission path is a transmission path (313, 314) of a further control device,
a measure component (414), configured for performing the at least one selected measure.

15. A control system (1), comprising a control device (100) according to claim 13 and a cloud system (200) according to claim 14, wherein the control system (1) is configured to carry out the method according to one of claims 1 to 12.

16. A computer program, comprising instructions which can be executed by one or more processors, wherein the instructions, when executed, cause the one or more processors to carry out the method according to one of claims 1 to 12.

17. The method (10) according to one of claims 1 to 12 or the control device (100) according to claim 13 or the cloud system (200) according to claim 14, wherein the control device (100) is a programmable logic controller, PLC, control device.

## Revendications

1. Procédé (10) d'optimisation d'une transmission de données dans un système d'automatisation entre un dispositif de commande (100) et au moins un système en nuage (200), dans lequel le procédé (10) comprend au moins les étapes suivantes :
déterminer (11) une caractéristique de transmission de données au moins d'une voie de transmission (302, 304, 306) disponible pour transmettre des données, au moyen d'un premier et/ou d'un second composant de détermination (411), dans lequel le premier composant de détermination fait partie du dispositif de commande et le second composant de détermination fait partie du système en nuage ;
analyser (12), sur la base de la caractéristique de transmission de données déterminée, si les données à transmettre peuvent être transmises, dans lequel l'analyse est effectuée au moyen d'un premier et/ou d'un second composant d'analyse (412), dans lequel le premier composant d'analyse fait partie du dispositif de commande et le second composant d'analyse fait partie du système en nuage ;
sélectionner (13) au moins une mesure d'un ensemble de mesures afin d'adapter les données à transmettre et/ou la voie de transmission dans le cas où les données à transmettre ne peuvent pas être transmises afin de permettre la transmission de données, dans lequel l'au moins une mesure comprend l'utilisation d'une voie de transmission alternative et/ou supplémentaire, dans lequel la voie de transmission alternative et/ou supplémentaire est une voie de transmission (313, 314) d'un autre dispositif de commande, dans lequel la sélection est effectuée au moyen d'un premier et/ou d'un second composant de sélection (413), dans lequel le premier composant de sélection fait partie du dispositif de commande et le second composant de sélection fait partie du système en nuage,
réaliser (14) l'au moins une mesure sélectionnée au moyen d'un premier et/ou d'un second composant de mesure (414), dans lequel le premier composant de mesure fait partie du dispositif de commande et le second composant de mesure fait partie du système en nuage.

2. Procédé (10) selon la revendication 1, comprenant en outre la transmission (15) de données entre le dispositif de commande (100) et le système en nuage (200) après la réalisation (14) de la mesure.

3. Procédé (10) selon l'une des revendications précédentes, dans lequel la détermination (11) de la caractéristique de transmission de données au moins d'une voie de transmission comprend l'une parmi :
- la détermination d'une largeur de bande de l'au moins une voie de transmission,
- la détermination du nombre de voies de transmission disponibles,
- la détermination d'un état d'un tampon de données,
- la détermination d'une durée de transmission,
- la détermination d'un temps d'attente.

4. Procédé (10) selon l'une des revendications précédentes, dans lequel la détermination (11) de la caractéristique de transmission de données au moins d'une voie de transmission (302, 304, 306) comprend la détermination (11) de la caractéristique de transmission de données dans la liaison montante et/ou dans la liaison descendante.

5. Procédé (10) selon l'une des revendications précédentes, dans lequel la détermination (11) de la caractéristique de transmission de données comprend un test de vitesse terminé et/ou une surveillance continue de la caractéristique de transmission de données.

6. Procédé (10) selon la revendication 5, dans lequel la surveillance continue comprend la surveillance continue d'un tampon de données côté émission et/ou côté réception et/ou la surveillance continue d'une durée de transmission.

7. Procédé (10) selon l'une des revendications précédentes, dans lequel l'analyse (12) pour déterminer si les données à transmettre peuvent être transmises se base sur la caractéristique de transmission de données déterminée et une configuration de données à transmettre.

8. Procédé (10) selon l'une des revendications précédentes, dans lequel le procédé comprend en outre la détermination de la configuration des données à transmettre, et dans lequel la configuration de données comprend au moins un des paramètres de configuration suivants : un volume de données, un type de données, une priorité, un niveau de sécurité nécessaire, une redondance nécessaire.

9. Procédé (10) selon l'une des revendications précédentes, dans lequel l'ensemble de mesures comprend au moins la mesure de l'utilisation d'une voie de transmission alternative et/ou supplémentaire, dans lequel l'ensemble de mesures comprend en outre au moins une des mesures suivantes :
- une procédure de priorisation,
- une procédure de réduction de données,
- une procédure de réduction de fonction,
- une adaptation d'un intervalle de transmission,
- une utilisation d'une procédure de transmission alternative et/ou supplémentaire.

10. Procédé (10) selon l'une des revendications précédentes, dans lequel l'au moins une voie de transmission (302, 304, 306) est conçue de manière filaire et/ou sans fil.

11. Procédé (10) selon l'une des revendications précédentes, dans lequel les données sont transmises en parallèle et/ou en série par au moins un dispositif de commande à plusieurs systèmes en nuage.

12. Procédé de commande d'un système d'automatisation au moyen d'un dispositif de commande (100), dans lequel le dispositif de commande (100) utilise pour la commande du système d'automatisation le procédé (10) d'optimisation d'une transmission de données dans le système d'automatisation entre le dispositif de commande (100) et au moins un système en nuage (200) selon l'une des revendications 1 à 11.

13. Dispositif de commande (100) conçu pour l'optimisation d'une transmission de données dans un système d'automatisation entre le dispositif de commande (100) et au moins un système en nuage (200), dans lequel le dispositif de commande contient un dispositif de transmission de données et un dispositif de composant (400) qui comprend au moins un des composants suivants :
un composant de détermination (411) conçu pour déterminer (11) une caractéristique de transmission de données au moins d'une voie de transmission (302, 304, 306) disponible pour transmettre des données ;
un composant d'analyse (412) conçu pour analyser (12), sur la base de la caractéristique de transmission de données déterminée, si les données à transmettre peuvent être transmises,
un composant de sélection (413) conçu pour sélectionner (13) au moins une mesure d'un ensemble de mesures afin d'adapter les données à transmettre et/ou la voie de transmission dans le cas où les données à transmettre ne peuvent pas être transmises afin de permettre la transmission de données, dans lequel l'au moins une mesure comprend l'utilisation d'une voie de transmission alternative et/ou supplémentaire, dans lequel la voie de transmission alternative et/ou supplémentaire est une voie de transmission (313, 314) d'un autre dispositif de commande,
un composant de mesure (414) conçu pour réaliser (14) l'au moins une mesure sélectionnée.

14. Système en nuage (200) conçu pour l'optimisation d'une transmission de données dans un système d'automatisation entre un dispositif de commande (100), et le système en nuage (200), dans lequel le système en nuage (200) contient un dispositif de transmission de données et un dispositif de composant (400') qui comprend au moins un des composants suivants :
un composant de détermination (411) conçu pour déterminer (11) une caractéristique de transmission de données au moins d'une voie de transmission (302, 304, 306) disponible pour transmettre des données ;
un composant d'analyse (412) conçu pour analyser (12), sur la base de la caractéristique de transmission de données déterminée, si les données à transmettre peuvent être transmises,
un composant de sélection (413) conçu pour sélectionner (13) au moins une mesure d'un ensemble de mesures afin d'adapter les données à transmettre et/ou la voie de transmission dans le cas où les données à transmettre ne peuvent pas être transmises afin de permettre la transmission de données, dans lequel l'au moins une mesure comprend l'utilisation d'une voie de transmission alternative et/ou supplémentaire, dans lequel la voie de transmission alternative et/ou supplémentaire est une voie de transmission (313, 314) d'un autre dispositif de commande,
un composant de mesure (414) conçu pour réaliser l'au moins une mesure sélectionnée.

15. Système de commande (1) comprenant un dispositif de commande (100) selon la revendication 13 et un système en nuage (200) selon la revendication 14, dans lequel le système de commande (1) est conçu pour réaliser le procédé selon l'une des revendications 1 à 12.

16. Programme informatique comprenant des instructions qui peuvent être réalisées par un ou plusieurs processeurs, dans lequel les instructions amènent lors de leur réalisation l'un ou les plusieurs processeurs à réaliser le procédé selon l'une des revendications 1 à 12.

17. Procédé (10) selon l'une des revendications 1 à 12, ou dispositif de commande (100) selon la revendication 13, ou système en nuage (200) selon la revendication 14, dans lequel le dispositif de commande (100) est un dispositif de commande à commande par mémoire programmable, SPS.
